# DEMANDE DE BREVET EUROPEEN

(11) **EP 4 663 340 A1**
(43) Date de publication de la demande: **17.12.2025**
(21) Numéro de dépôt: 25181349.9
(22) Date de dépôt: 06.06.2025
(51) Int. Cl.: B23Q 1/00, B23Q 3/18

(54) **MANDRIN**

(30) Priorité: 10.06.2024 CH 627202024
(71) Demandeur: TGColin SA, 2350 Saignelégier (CH)
(72) Inventeur: WASER, Yann, 2350 Saignelégier (CH); GRETTER, Jérôme, 68130 Hundsbach (FR)
(74) Mandataire: P&TS SA (AG, Ltd.)

(57) **Abrégé**

La présente invention concerne un mandrin (1) comprenant :
- une embase (10),
- une palette (20), destinée à être fixée sur l'embase (10), dans lequel
- l'embase (10) comprend au moins une empreinte (100) en saillie, l'empreinte (100) présentant un renflement (110) de chaque côté (120, 130), et
- la palette (20) comprend au moins une ouverture conique (200) destinée à venir se fixer par déformation suite à un contact de Hertz (C) en correspondance des renflements (110) sur une empreinte (100) correspondante.

Ce mandrin permet un positionnement optimal de la palette (20) sur l'embase (10), tout en utilisant une force réduite pour la fixation de la palette (20) sur l'embase (10) et/ou tout en utilisant une palette (20) à faible coût.

## Description

### Domaine technique

La présente invention concerne un mandrin, notamment mais de façon pas limitative un mandrin pour une micro-machine-outil, par exemple pour le domaine de l'horlogerie.

### Etat de la technique

On connait dans l'état de l'art des mandrins qui permettent de serrer une pièce ou un outil.

Ces mandrins comprennent en général :
- une embase, qui peut par exemple faire partie d'un corps principal du mandrin, et
- une palette, destinée à être fixée sur l'embase.

La palette est en général arrangée pour recevoir un système de serrage d'une pièce à usiner ou d'un outil, ou pour porter, par exemple directement, la pièce ou l'outil.

Le positionnement de la palette sur l'embase doit être le plus précis possible. Des systèmes de positionnement de la palette sur l'embase, par exemple basés sur des ressorts et/ou sur des billes, sont connus.

Certains systèmes de positionnement comprennent des éléments flexibles tels que des lames flexibles, afin de positionner la palette sur l'embase non seulement dans le plan xy, à savoir dans le plan parallèle aux surfaces principales d'interaction de la palette et de l'embase, mais aussi dans la direction z, à savoir la direction perpendiculaire au plan xy, tout en utilisant une force réduite pour la fixation de la palette sur l'embase. Cependant dans ces systèmes la palette est encombrante et son coût élevé, car elle n'est pas simple à fabriquer.

Le document WO2008136049 décrit un dispositif de positionnement et de fixation pour palette de travail. Il comprend un élément de base équipé d'inserts en caoutchouc, ainsi qu'un élément de référence annulaire qui le recouvre. Les inserts en caoutchouc permettent la déformation de l'élément de référence annulaire lorsqu'ils interagissent avec des saillies présentes sur la palette.

Lors de l'accouplement de la palette sur le dispositif de positionnement, l'élément de référence annulaire fléchit, à l'instar des systèmes de positionnement traditionnels. Cette compliance garantit un contact entre la surface inférieure de la palette et la référence z du dispositif, assurant ainsi un positionnement en x, y et z.

Le dispositif, composé de plusieurs pièces, se révèle relativement volumineux. La fabrication de l'anneau de référence est particulièrement complexe, car toutes les zones de déformation doivent être calibrées pour garantir une flexion uniforme. Étant donné que ce sont les éléments de positionnement qui se déforment, et non la palette, les saillies des palettes doivent respecter des tolérances de forme et de localisation extrêmement précises (2 à 3 micromètres) afin d'assurer un positionnement optimal.

Enfin, la palette étant un consommable, son coût de production demeure élevé.

Le document US2016263716 décrit un dispositif de positionnement comprenant une base, une pluralité de blocs de positionnement et un support de pièce (palette). Chaque bloc de positionnement est une saillie allongée et comprend une partie de fixation conique destinée à coopérer avec une fente de fixation conique correspondante de la base, et également une partie de fixation opposée à la partie de fixation conique. Cette partie de fixation comprend deux faces de contact symétriques et deux parties flexibles définies dans les deux faces de contact symétriques, constituées de deux évidements allongés symétriquement. Ces évidements permettent de définir des lames qui se fléchissent comme dans les systèmes de positionnement connus lors de la coopération des blocs de positionnement avec le support de pièce.

### Bref résumé de l'invention

Un but de la présente invention est de proposer un mandrin exempt des limitations des mandrins connus.

Un autre but de l'invention est de proposer un mandrin qui permet un positionnement optimal de la palette sur l'embase, tout en utilisant une force réduite pour la fixation de la palette sur l'embase et aussi tout en utilisant une palette à faible coût et/ou moins encombrante.

Un autre but de l'invention est de proposer un mandrin avec un nombre réduit de pièces et/ou plus facile à réaliser et/ou à assembler.

Un autre but de l'invention est de proposer un mandrin alternatif aux mandrins connus.

Selon l'invention, ces buts sont atteints notamment au moyen d'un mandrin comportant les caractéristiques de la revendication 1, des modes de réalisation préférentiels étant donnés dans les revendications dépendantes.

Le mandrin selon l'invention comprend une embase et une palette, destinée à être fixée sur l'embase.

Selon l'invention, l'embase comprend au moins une empreinte (ou îlot) en saillie, l'empreinte présentant un renflement de chaque côté, et la palette comprend au moins une ouverture conique (ou cône) destinée à venir se fixer par déformation suite à un contact de Hertz en correspondance des renflements sur une empreinte correspondante.

Dans ce contexte, un contact de Hertz est un contact entre deux solides (par exemple une sphère et un plan, un cylindre et un plan, deux sphères ou deux cylindres) qui se touchent localement et qui cause une compression locale d'au moins un solide, car les forces sont concentrées sur une petite surface, sans provoquer de flexion du solide. Ce contact crée donc une zone de pression très petite autour du point de contact.

Dans ce cas, la déformation principale est une compression locale à l'endroit du contact. Une contact de Hertz n'implique pas de flexion, notamment car la zone de contact est très petite par rapport aux dimensions des corps en contact et il n'y a pas d'effort qui cherche à courber les corps. De plus, les forces agissent perpendiculairement aux surfaces en contact.

En résumant, lors d'un contact de Hertz, le matériau de contact d'au moins un corps s'enfonce légèrement localement, en s'écrasant localement, mais il ne se plie pas comme une poutre le ferait sous un poids. Le contact de Hertz cause donc une compression locale car les forces sont concentrées sur une petite surface, sans provoquer de flexion des corps en contact.

Le contact de Hertz se distingue par sa capacité à induire une déformation significative dans l'axe perpendiculaire au rayon de courbure d'au moins une zone de contact, sous l'application d'une force relativement faible. La force nécessaire à la déformation des surfaces en contact dépend à la fois de la dureté des matériaux et de leur géométrie.

Cette particularité du contact de Hertz est exploitée dans la présente invention, car elle permet une compliance selon l'axe Z. Ainsi, sous l'application d'une faible force, la surface de la palette entre en contact avec une référence en z du dispositif de positionnement, par exemple une zone d'appui. Cette propriété garantit un positionnement extrêmement précis selon les axes x, y et z.

Cette solution présente notamment l'avantage par rapport à l'art antérieur d'avoir un positionnement précis de la palette sur l'embase non seulement dans le plan xy, mais aussi dans la direction z, tout en utilisant une palette à faible coût et/ou moins encombrante par rapport aux solutions connues, notamment celles basées sur des éléments flexibles. Dans un mode de réalisation, le positionnement dans le plan xy est précis avec une tolérance inférieure à 0,003 mm. Dans un mode de réalisation, le positionnement dans la direction z est précis avec une tolérance inférieure à 0,002 mm.

En effet, le placement de(s) empreintes dans l'embase et celui de(s) ouverture(s) conique(s) dans la palette permet un positionnement dans le plan xy de la palette sur l'embase, ainsi qu'un positionnement angulaire de la palette sur l'embase.

De plus, le contact de Hertz entre chaque empreinte et l'ouverture conique correspondante permet de maîtriser également la profondeur de l'enfoncement de l'empreinte dans l'ouverture conique correspondante, et donc le positionnement en z de la palette sur l'embase.

Cette solution présente notamment l'avantage par rapport à l'art antérieur d'avoir la possibilité de réaliser la(les) ouverture(s) conique(s) de la palette avec des techniques usuelles, par exemple et de façon non limitative par fraisage, ce qui permet de réduire le coût de fabrication de la palette. La palette est aussi moins encombrante par rapport aux solutions connues.

Enfin, cette solution présente notamment l'avantage par rapport à l'art antérieur de réduire la force d'enfoncement de la palette sur l'embase par rapport aux solutions connues, tout en utilisant une palette à faible coût et/ou moins encombrante par rapport aux solutions connues.

Dans un mode de réalisation, la force d'enfoncement de la palette sur l'embase appartient à la plage 50 N - 6000 N. Notamment, si le mandrin est un pour une micro-machine-outil, par exemple pour le domaine de l'horlogerie, à savoir un micro-mandrin arrangé pour serrer une pièce ou un outil ayant une dimension maximale inférieure à 10 cm, de préférence inférieure à 1 cm, la force d'enfoncement de la palette sur l'embase appartient à la plage 50 N - 1200 N. Si le mandrin est pour une machine « standard » (c'est-à-dire, plus grande par rapport à une micro-machine), à savoir un mandrin « standard » arrangé pour serrer une pièce ou un outil ayant une dimension maximale égale ou supérieure à 10 cm, la force d'enfoncement de la palette sur l'embase appartient à la plage 100 N - 6000 N.

Dans un mode de réalisation, l'angle qui définit l'inclinaison de la surface latérale de l'ouverture conique par rapport à la direction z est compris dans la plage 1,5° - 10°, notamment dans la plage 3° - 7°.

Dans un mode de réalisation, l'angle qui définit l'inclinaison de la surface latérale de l'empreinte est plus grand que celui de la palette. Dans un mode de réalisation, il est compris dans la plage 1,55° - 30°.

Dans un mode de réalisation, le renflement de l'empreinte est défini par un rayon appartenant à la plage 0,1 mm - 5 mm. Notamment, si le mandrin est pour une micro-machine-outil, par exemple pour le domaine de l'horlogerie, le rayon appartient à la plage 0,1 mm - 3,0 mm, notamment à la plage 1,5 mm - 2,5 mm. Si le mandrin est pour une machine « standard », le rayon appartient à la plage 0,5 mm - 5,0 mm.

Dans un mode de réalisation, la déformation de la palette et/ou de l'embase suite au contact de Hertz en correspondance des renflements et de la zone de l'ouverture conique en contact avec les renflements se réalise sur une surface de la palette et/ou de l'embase de quelques µm², Dans un mode de réalisation, la déformation de la palette et/ou de l'embase suite au contact de Hertz en correspondance des renflements et de la zone de l'ouverture conique en contact avec les renflements se réalise sur une longueur comprise entre 0,1 µm et 0,5 µm.

Dans un mode de réalisation, la palette et l'embase sont arrangées en sorte que le coefficient de frottement entre la palette et l'embase appartient à la plage 0,2 - 0,8, notamment il est égal à 0,5.

Dans un mode de réalisation, la palette et l'embase sont arrangées en sorte que la déformation soit plastique lors de la première fixation de la palette sur l'embase. La déformation plastique est une déformation permanente : le matériau ne revient pas (totalement) à sa forme initiale quand on enlève la force. Dans le contexte de l'invention, la déformation plastique est par compression (le matériau est écrasé), et non pas par flexion, car le matériau ne se plie ni courbe pas.

Dans ce mode de réalisation, la palette et l'embase sont arrangées en sorte que la déformation soit élastique dès la deuxième fois que la palette est fixée sur l'embase. La palette, ayant subi une déformation plastique initiale, travaille alors dans sa zone élastique.

Dans un autre mode de réalisation, la palette et l'embase sont arrangées en sorte que la déformation soit toujours élastique, ce qui permet un positionnement en x et y de la palette sur l'embase plus précis par rapport au cas où la déformation soit plastique.

Dans un mode de réalisation, la palette est sensiblement cylindrique et la(les) ouverture(s) conique(s) est(sont) disposée(s) radialement, à savoir leur direction principale (à savoir leur longueur) est disposée selon un rayon de la palette.

Dans un mode de réalisation, l'embase est sensiblement cylindrique et la(les) empreinte(s) est(sont) disposée(s) radialement, à savoir leur direction principale (à savoir leur longueur) est disposée selon un rayon de l'embase.

Dans un mode de réalisation, la(les) ouverture(s) conique(s) est(sont) en correspondance de la périphérie de la surface de la palette destinée à interagir avec l'embase.

Dans un mode de réalisation, la(les) empreinte(s) est(sont) en correspondance de la périphérie de la surface de l'embase destinée à interagir avec la palette.

Dans un mode de réalisation, l'embase et/ou la palette comprend (comprennent) une ouverture centrale permettant de créer un espace libre central du mandrin, qui peut être destiné à recevoir une tige ou tout autre élément exécutant une fonction.

Dans un mode de réalisation, le mandrin comprend trois empreintes et trois ouvertures coniques correspondantes. Ce mode de réalisation permet une liaison isostatique entre la palette et l'embase.

Dans un mode de réalisation, le mandrin comprend quatre empreintes et quatre ouvertures coniques correspondantes. Ce mode de réalisation permet aussi une liaison isostatique entre la palette et l'embase, tout en facilitant leur fabrication.

Dans un mode de réalisation, la(les) empreinte(s) est(sont) réalisé(s) en matériau ayant une dureté supérieure à 650 HV30, notamment supérieure à 1000 HV30, par exemple de 1600 HV30.

Dans un mode de réalisation, la(les) ouverture(s) conique(s) est(sont) réalisé(s) en acier, par exemple en acier trempé.

Dans un mode de réalisation, la longueur de l'ouverture conique est plus courte que la longueur du rayon de l'empreinte correspondante, en sorte que la longueur de contact entre l'ouverture conique et l'empreinte corresponde à la longueur de l'ouverture conique. Le contact de Hertz se produit donc le long d'une ligne, et non pas en correspondance d'un point. Dans le cas où l'empreinte soit réalisée dans un matériau plus dur que celui de l'ouverture conique correspondante, le fait que la longueur de l'ouverture conique de la palette est plus petite que la longueur de l'empreinte du mandrin permet de réduire les marques qui peuvent être laissées par l'empreinte sur l'ouverture conique correspondante, lorsque la palette est fixée sur l'embase.

Dans un mode de réalisation, la longueur de l'ouverture conique appartient à la plage 1,25 mm - 2,5 mm. Notamment, si le mandrin est pour une micro-machine-outil, par exemple pour le domaine de l'horlogerie, la longueur de l'ouverture conique appartient à la plage 0,5 mm - 3,5 mm.

Dans un mode de réalisation, au moins une empreinte et de préférence toutes les empreintes sont monobloc, à savoir réalisées de façon monolithique. Cela n'exclut pas qu'elles puissent être réalisées dans deux ou plusieurs matériaux différents.

### Brève description des figures

Des exemples de mise en œuvre de l'invention sont indiqués dans la description illustrée par les figures annexées dans lesquelles :
La figure 1 illustre une vue en coupe d'un mandrin selon un mode de réalisation de l'invention.
La figure 2 illustre une vue en perspective d'une embase du mandrin selon un mode de réalisation de l'invention.
La figure 3 illustre une vue en perspective d'une palette du mandrin selon un mode de réalisation de l'invention.
La figure 4 illustre une vue en coupe d'une portion d'une palette fixée sur une embase selon un mode de réalisation de l'invention.

### Exemple(s) de mode de réalisation de l'invention

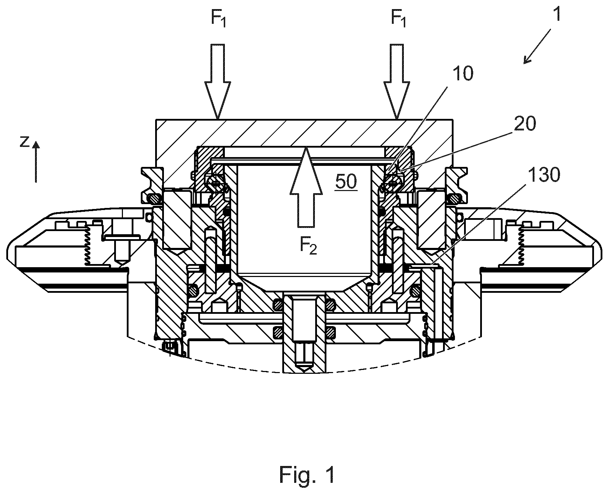

La figure 1 illustre une vue en coupe d'un mandrin 1 selon un mode de réalisation de l'invention. Ses dimensions sont adaptées selon les besoins. Dans un mode de réalisation préférentiel mais pas limitatif, le mandrin 1 est adapté pour travailler des pièces du domaine de l'horlogerie.

Le mandrin 1 comprend une embase 10, qui fait partie du corps principal du mandrin 1, et une palette 20, destinée à être fixée sur l'embase 10. La palette 20 est en général arrangée pour recevoir un système de serrage d'une pièce à usiner ou d'un outil, ou pour porter, par exemple directement, la pièce ou l'outil.

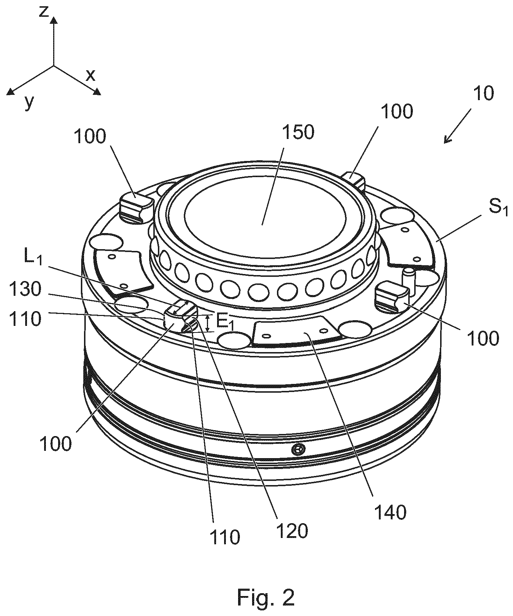

La figure 2 illustre une vue en perspective d'un mode de réalisation d'une embase 10. Dans un mode de réalisation, elle a une forme sensiblement cylindrique.

Selon l'invention, l'embase 10 comprend au moins une empreinte 100 (ou îlot) en saillie. Dans l'exemple de la figure 2, l'embase 10 comprend quatre empreintes 100, ce qui permet une liaison isostatique entre la palette 20 et l'embase 10, tout en facilitant leur fabrication.

Dans d'autres modes de réalisation, le nombre d'empreintes peut être différent. Trois empreintes 100 permettent aussi une liaison isostatique entre la palette 20 et l'embase 10.

Les empreintes 100 sont en saillie par rapport à la surface S₁ de l'embase 10 destinée à interagir avec la palette 20.

Dans un mode de réalisation, les empreintes 100 sont disposées radialement, à savoir leur direction principale (à savoir leur longueur L₁) est disposée selon un rayon de l'embase 10.

Selon l'invention, chaque empreinte 100 présente un renflement 110 de chaque côté 120, 130, donc deux renflements 110, comme visible par exemple sur la figure 2. Les deux côtés 120, 130 sont ceux latérales de l'empreinte 100, le long de la direction radiale de l'empreinte 100. Ces côtés 120, 130 ont des portions adjacentes aux renflements 110, qui sont sensiblement perpendiculaires à la surface S₁.

Dans un mode de réalisation, l'embase 10 comprend sur sa surface S₁ au moins zone d'appui 140 de positionnement, contribuant au positionnement le long de l'axe z de la palette 20 sur l'embase 10. Dans un mode de réalisation, il y a zone d'appui 140, par exemple quatre, comme illustré sur la figure 2. Dans un mode de réalisation, chaque zone d'appui 140 est entre deux empreintes 100 adjacentes. Comme le nom le suggère, chaque zone d'appui 140 permet de définir une surface d'appui de référence Z. Chaque zone d'appui 140 peut être une pièce séparée de l'embase 10 et fixée à elle avec des moyens de fixation connus (par exemple par vissage), ou bien elle peut former avec l'embase 100 une pièce monobloc, à savoir formée de façon monolithique.

Chaque empreinte 100 a une longueur L₁ dans la direction radiale de l'embase 10, ainsi qu'une certaine épaisseur E₁. Dans un mode de réalisation, la longueur L₁ de l'ouverture conique appartient à la plage 1,25 mm - 2,5 mm. Notamment, si le mandrin est pour une micro-machine-outil, par exemple pour le domaine de l'horlogerie, la longueur L₁ de l'ouverture conique appartient à la plage 1 mm - 3,5 mm.

Dans un mode de réalisation, l'épaisseur E₁ de l'ouverture conique appartient à la plage 1 mm -10 mm. Notamment, si le mandrin 1 est pour une micro-machine-outil, par exemple pour le domaine de l'horlogerie, l'épaisseur E₁ de l'ouverture conique appartient à la plage 1 mm - 4 mm. Si le mandrin 1 est pour une machine « standard », l'épaisseur E₁ de l'ouverture conique appartient à la plage 2 mm - 10 mm.

Dans un mode de réalisation, les empreintes 100 ont toutes la même forme et les mêmes dimensions. Dans un autre mode de réalisation, elles ont toute la même forme mais leur dimensions peuvent varier.

Dans un mode de réalisation, l'embase 10 comprend une ouverture centrale 150, qui peut être borgne ou traversante.

Dans un mode de réalisation, la(les) empreinte(s) 100 est(sont) en correspondance de la périphérie de la surface S₁ de l'embase 10 destinée à interagir avec la palette 20.

Dans un mode de réalisation, la(les) empreinte(s) est(sont) réalisé(s) en matériau ayant une dureté supérieure à 650 HV30, notamment supérieure à 1000 HV30, par exemple de 1600 HV30. Cette dureté permet de préserver l'embase 10 de l'usure.

L'embase 10 de la figure 2 comprend d'autres caractéristiques qui ne seront pas détaillées ici et qui ne sont pas limitatives pour la présente invention.

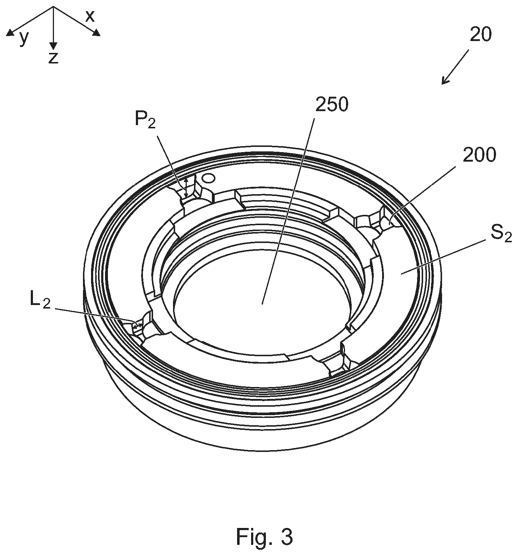

La figure 3 illustre une vue en perspective d'un mode de réalisation d'une palette 20. Dans un mode de réalisation, elle a une forme sensiblement cylindrique. La vue en perspective de la figure 3 est différente par rapport à celle de la figure 2, comme indiqué par les axes xyz. En effet, la surface supérieure de la palette 20 telle que visible sur la figure 3 est arrangée pour interagir avec la surface supérieure de l'empreinte 10 telle que visible sur la figure 2.

Selon l'invention, la palette 20 comprend au moins une ouverture conique 200 destinée à venir se fixer par déformation suite à un contact de Hertz en correspondance des renflements 110 sur une empreinte 10 correspondante de l'embase 10. Dans l'exemple de la figure 3, la palette 20 comprend quatre ouvertures coniques 200, destinées à coopérer avec les quatre empreintes 10 de la figure 2.

Un contact de Hertz décrit les contraintes qui arrivent lorsque deux surfaces courbes viennent en contact, en se déformant par compression sous l'action des forces appliquées.

En général, le nombre d'empreintes 100 est égal à celui d'ouvertures coniques 200.

Dans un mode de réalisation, la(les) ouverture(s) conique(s) 200 est(sont) en correspondance de la périphérie de la surface S₂ de la palette 20 destinée à interagir avec l'embase 10.

Dans un mode de réalisation, les ouvertures coniques 200 sont disposées radialement, à savoir leur direction principale (à savoir leur longueur L₂) est disposée selon un rayon de la palette 20.

Chaque ouverture conique a une longueur L₂ dans la direction radiale de la palette 20, ainsi qu'une certaine profondeur P₂. Dans un mode de réalisation, la longueur L₂ appartient à la plage 0,5 mm - 10 mm. Notamment, si le mandrin 1 est pour une micro-machine-outil, par exemple pour le domaine de l'horlogerie, la longueur L₂ appartient à la plage 0,5 mm - 3,5 mm. Si le mandrin 1 est pour une machine « standard », la longueur L₂ appartient à la plage 1,0 mm - 10,0 mm.

Dans un mode de réalisation, la profondeur P₂ appartient à la plage 1,1 mm - 11 mm. Notamment, si le mandrin 1 est pour une micro-machine-outil, par exemple pour le domaine de l'horlogerie, la profondeur P₂ appartient à la plage 1,1 mm - 5 mm. Si le mandrin 1 est pour une machine « standard », la profondeur P₂ appartient à la plage 2,1 mm - 11 mm.

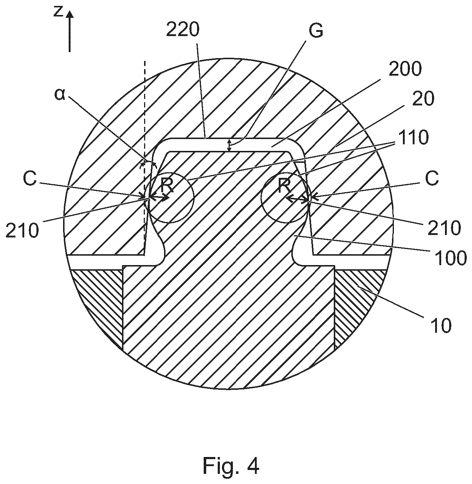

Dans un mode de réalisation et comme visible sur la figure 4, la profondeur P₂ de l'ouverture conique 200 est supérieure à l'épaisseur E₁ de l'empreinte 100 correspondante, en sorte qu'il existe un gap G entre l'empreinte 100 et l'ouverture conique 200 dans la direction z (G = P₂ - E₁).

Dans un mode de réalisation, la longueur L₁ de l'ouverture conique 200 est plus courte que la longueur L₂ de l'empreinte 100 correspondante, en sorte que la longueur de contact entre l'ouverture conique 200 et l'empreinte 100 corresponde à la longueur de l'ouverture conique 200. Le contact de Hertz se produit donc le long d'une ligne, et non pas en correspondance d'un point.

Dans un mode de réalisation, les ouvertures coniques 2000 ont toutes la même forme et les mêmes dimensions. Dans un autre mode de réalisation, elles ont toute la même forme mais leur dimensions peuvent varier.

Dans un mode de réalisation, la palette 20 comprend une ouverture centrale 250, qui peut être borgne ou traversante.

Dans un mode de réalisation, l'ouverture centrale 250 de la palette 20 coopère avec l'ouverture centrale 150 de l'embase 10, afin de créer un espace libre central 50 du mandrin 1, dont un mode de réalisation est visible sur la figure 1. Cet espace libre central 50 peut être destiné à recevoir une tige ou tout autre élément exécutant une fonction, rendant anis le mandrin 1 plus compact.

Dans un mode de réalisation, la(les) ouverture(s) conique(s) 200 est(sont) réalisé(s) en acier, par exemple en acier trempé.

La palette 20 de la figure 3 comprend d'autres caractéristiques qui ne seront pas détaillées ici et qui ne sont pas limitatives pour la présente invention.

La figure 4 illustre une vue en coupe d'une portion d'une palette 20 fixée sur une embase 10, selon un mode de réalisation de l'invention. Il est possible de voir que l'ouverture conique 200 est destinée à venir se fixer par déformation suite à un contact C de Hertz en correspondance des renflements 110 sur une empreinte 10 correspondante de l'embase 10.

Dans un mode de réalisation, l'ouverture conique a une forme tronconique, définie par deux surfaces latérales 210 et par une base 220, comme visible par exemple sur la figure 4.

Dans un mode de réalisation, l'angle α, visible sur la figure 4, qui définit l'inclinaison de la surface latérale 210 de l'ouverture conique 20 par rapport à la direction z est compris dans la plage 1,5° - 10°, notamment dans la plage 3° - 7°.

Dans un mode de réalisation, chaque renflement 110 de l'empreinte 100 est défini par un rayon R appartenant à la plage 0,1 mm - 5 mm. Notamment, si le mandrin 1 est pour une micro-machine-outil, par exemple pour le domaine de l'horlogerie, le rayon R appartient à la plage 0,1 mm - 3,0 mm, notamment à la plage 1,5 mm - 2,5 mm. Si le mandrin 1 est pour une machine « standard », le rayon R appartient à la plage 0,5 mm - 5,0 mm

Dans un mode de réalisation, les deux renflement 110 de l'empreinte 10 sont identiques.

Le mandrin 1 selon l'invention présente notamment l'avantage par rapport à l'art antérieur d'avoir un positionnement précis de la palette 20 sur l'embase 10 non seulement dans le plan xy, à savoir dans le plan parallèle aux surfaces S₁, S₂ principales d'interaction de la palette 20 et de l'embase 10, mais aussi dans la direction z, à savoir la direction perpendiculaire au plan xy.

En effet, le placement de(s) empreintes 100 dans l'embase 10 et celui de(s) ouverture(s) conique(s) 200 dans la palette 20 permet un positionnement dans le plan xy, ainsi qu'un positionnement angulaire de la palette 20 sur l'embase 10.

De plus, le contact C de Hertz entre chaque empreinte 100 et l'ouverture conique 200 correspondante permet de maîtriser également la profondeur de l'enfoncement de l'empreinte 100 dans l'ouverture conique 200 correspondante, à savoir le gap G, et de garantir donc que la surface de la palette rentre en contact avec une surface de référence en z de l'embase de positionnement.

Cette solution présente notamment l'avantage par rapport à l'art antérieur d'avoir la possibilité de réaliser la(les) ouverture(s) conique(s) de 200 la palette 20 avec des techniques usuelles, par exemple et de façon non limitative par fraisage, ce qui permet de réduire le coût de fabrication de la palette 20.

De plus, le nombre des pièces du mandrin selon l'invention est limité, ce qui permet de simplifier aussi son assemblage et/ou sa réalisation.

Enfin, cette solution présente notamment l'avantage par rapport à l'art antérieur de réduire la force d'enfoncement de la palette 20 sur l'embase 10 par rapport aux solutions connues. En d'autres mots, avec le mandrin selon l'invention, la force requise pour fixer la palette 20 sur l'embase 10 est inférieure à celle des solutions connues, pour la même précision de positionnement de la palette sur l'embase.

Dans un mode de réalisation, la force d'enfoncement de la palette 20 sur l'embase 10 appartient à la plage 50 N - 6000 N. Notamment, si le mandrin 1 est pour une micro-machine-outil, par exemple pour le domaine de l'horlogerie, la force d'enfoncement de la palette sur l'embase appartient à la plage 50 N - 1200 N. Si le mandrin 1 est pour une machine « standard », la force d'enfoncement de la palette sur l'embase appartient à la plage 100 N - 6000 N.

Dans un mode de réalisation, la déformation de la palette 20 et/ou de l'embase 10 suite au contact de Hertz en correspondance des renflements 110 et de la zone de l'ouverture conique 200 en contact avec les renflements se réalise sur une surface de la palette 20 et/ou de l'embase 10 de quelques µm².

Dans un mode de réalisation, la palette 20 et l'embase 10 sont arrangées en sorte que le coefficient de frottement entre la palette 20 et l'embase 10 appartient à la plage 0,2 - 0,8, notamment il est égal à 0,5.

Dans un mode de réalisation, la palette 20 et l'embase 10 sont arrangées en sorte que la déformation soit plastique lors de la première fois que la palette 20 est fixée sur l'embase 10, et devient plastique dès la deuxième fois que la palette 20 est fixée sur l'embase 10.

Dans un mode de réalisation, le mandrin 1 comprend un système de verrouillage (non illustré) pour verrouiller la fixation de la palette 20 sur l'embase 10, comprenant par exemple des ressorts, un piston, etc.

Dans un mode de réalisation, pour assurer un meilleur maintien de la palette 20 sur l'embase 10, l'espace 50 peut être alimentée en air, par exemple via un canal 130, dont un mode de réalisation est visible par exemple sur la figure 1. Dans ce mode de réalisation, la force de maintien F₁ de la palette 20, opposée à la force de poussée F₂, peut être augmentée.

### Signes de référence employés sur les figures

- 1: Mandrin
- 10: Embase
- 20: Palette
- 50: Espace central
- 100: Empreinte
- 110: Renflement
- 130: Canal
- 140: Zone d'appui
- 150: Ouverture centrale de l'embase
- 200: Ouverture conique
- 210: Surface latérale de l'ouverture conique
- 220: Base de l'ouverture conique
- α: Angle
- C: Contact de Hertz
- E₁: Epaisseur empreinte
- F₁: Force de maintien
- F₂: Force de poussée
- G: Gap
- L₁: Longueur empreinte
- L₂: Longueur ouverture conique
- P₂: Profondeur ouverture conique
- R: Rayon renflement
- S₁: Surface de l'embase
- S₂: Surface de la palette
- xyz: Espace cartésien

## Revendications

1. Mandrin (1) comprenant :
- une embase (10),
- une palette (20), destinée à être fixée sur l'embase (10),
dans lequel
- l'embase (10) comprend au moins une empreinte (100) en saillie, l'empreinte (100) présentant un renflement (110) de chaque côté (120, 130), et
- la palette (20) comprend au moins une ouverture conique (200) destinée à venir se fixer par déformation suite à un contact de Hertz (C) en correspondance des renflements (110) sur une empreinte (100) correspondante.

2. Mandrin (1) selon la revendication 1, dans lequel l'angle (α) qui définit l'inclinaison de la surface latérale (210) de l'ouverture conique (200) est compris dans la plage 1,5° - 10°.

3. Mandrin (1) selon l'une des revendications 1 ou 2, dans lequel le renflement (110) de l'empreinte (100) est défini par un rayon (R) appartenant à la plage 0,1 mm - 5 mm.

4. Mandrin (1) selon l'une des revendications 1 à 3, dans lequel la palette (20) est sensiblement cylindrique et la(les) ouverture(s) conique(s) (200) est(sont) disposée(s) selon un rayon de la palette (20).

5. Mandrin (1) selon l'une des revendications 1 à 4, dans lequel l'embase (10) est sensiblement cylindrique et la(les) empreinte(s) (100) est(sont) disposée(s) selon un rayon de l'embase (10).

6. Mandrin (1) selon l'une des revendications 1 à 5, dans lequel la(les) ouverture(s) conique(s) (200) est(sont) en correspondance de la périphérie d'une surface (S₂) de la palette (20) destinée à interagir avec l'embase (10) et/ou dans lequel la(les) empreinte(s) (100) est(sont) en correspondance de la périphérie d'une surface (S₁) de l'embase (10) destinée à interagir avec la palette (20).

7. Mandrin (1) selon l'une des revendications 1 à 6, dans lequel l'embase (10) et/ou la palette (20) comprend (comprennent) une ouverture centrale (105, 205) permettant de créer un espace libre (50) central du mandrin (1), qui peut être destiné à recevoir une tige ou tout autre élément exécutant une fonction.

8. Mandrin (1) selon l'une des revendications 1 à 7, comprenant trois empreintes (100) et trois ouvertures coniques (200) correspondantes.

9. Mandrin (1) selon l'une des revendications 1 à 8, comprenant quatre empreintes (100) et quatre ouvertures coniques (200) correspondantes.

10. Mandrin (1) selon l'une des revendications 1 à 9, dans lequel la(les) empreinte(s) (100) est(sont) réalisé(s) en matériau ayant une dureté supérieure à 650 HV30.

11. Mandrin (1) selon la revendication 10, dans lequel la(les) empreinte(s) (100) est(sont) réalisé(s) en matériau ayant une dureté supérieure à 1000 HV30.

12. Mandrin (1) selon l'une des revendications 1 à 11, dans lequel la longueur (L₂) de l'ouverture conique (200) est plus courte que la longueur (L₁) de l'empreinte (100) correspondante, en sorte que la longueur de contact entre l'ouverture conique (200) et l'empreinte (100) corresponde à la longueur (L₂) de l'ouverture conique (200).

13. Mandrin (1) selon l'une des revendications 1 à 12, dans lequel l'empreinte (100) en saillie est monobloc.
